# EUROPÄISCHE PATENTSCHRIFT

(11) **EP 1 746 272 B1**
(45) Veröffentlichungstag und Bekanntmachung des Hinweises auf die Patenterteilung: **04.06.2008**
(21) Anmeldenummer: 06008254.2
(22) Anmeldetag: 21.04.2006
(51) Int. Cl.: F02D 9/02, F02B 27/02, F02B 29/08, F02D 13/02, F02D 13/06

(54) **Verfahren zur Laststeuerung einer Kolben-Brennkraftmaschine**
Method of load controlling in an internal combustion engine
Procédé de controle du charge dans un moteur à combustion interne

(30) Priorität: 21.07.2005 DE 102005033994
(43) Veröffentlichungstag der Anmeldung: 24.01.2007
(73) Patentinhaber: Dr. Ing. h.c. F. Porsche Aktiengesellschaft, 71287 Weissach (DE)
(72) Erfinder: Schwarzenthal, Dietmar, 71254 Ditzingen (DE)

(56) Entgegenhaltungen:
- EP-A- 1 531 244
- EP-A1- 0 194 503
- EP-A1- 0 459 964
- DE-A1- 19 754 287
- DE-B3-0102004 013 66

## Beschreibung

Die Erfindung geht aus von einem Verfahren zur Laststeuerung einer Kolben - Brennkraftmaschine, gemäß Oberbegriff des Anspruchs 1.

Eine gattungsbildende Laststeuerung einer Kolben - Brennkraftmaschine ist der DE 197 54 287 A1 zu entnehmen. In bekannter Weise wird dabei ein Brennraum durch ein zu öffnendes und zu verschließendes Auslassventil mit einem Auslasskanal verbunden oder verschlossen; ferner wird der Brennraum während einer Öffnungsdauer durch ein Einlassventil mit einem Einlasskanal durch Öffnen des Einlassventils verbunden und anschließend durch Schließen des Einlassventils wieder verschlossen. Die Öffnungsdauer des Einlassventils wird also definiert durch den Öffnungsbeginn des Einlassventils und durch das Ende des Schließenvorgangs. Bei einer Brennkraftmaschine mit einem oder mehreren Zylindern und demgemäß einem oder mehreren Kolben wird in jedem Einlasskanal ein Zusatzventil angeordnet, das den Einlasskanal freigeben oder absperren kann. Das Zusatzventil ist stromaufwärts des Einlassventils angeordnet. Zur Laststeuerung kann das Zusatzventil während der Öffnungsdauer des Einlassventils geöffnet und geschlossen werden, wobei zumindest der Schließzeitpunkt des Zusatzventils innerhalb der Öffnungsdauer bezogen auf den Kurbelwellenwinkel variabel ist. Nachteilig bei diesem Verfahren ist, dass für die Betätigung des Zusatzventils ein hochdynamischer Stellantrieb für das Zusatzventil erforderlich ist.

In der DE 37 37 824 A1 ist eine so genannte Impulsaufladung für eine Brennkraftmaschine offenbart. Die Impulsaufladung wird durch ein kurzzeitiges Schließen und wieder Öffnen des Zusatzventils während der Öffnungsdauer des Einlassventils erreicht.

Aufgabe der Erfindung ist es, ein Verfahren der eingangs genannten Art anzugeben, bei dem die Laststeuerung einfach und kostengünstig durchgeführt werden kann.

Gelöst wird diese Aufgabe mit einem Verfahren, welches die in Anspruch 1 genannten Merkmale umfasst. Weitere Ausgestaltungen der Erfindung sind in den Unteransprüchen angegeben.

Die mit dem erfindungsgemäßen Verfahren hauptsächlich erzielten Vorteile sind darin zu sehen, das die Betätigung des Zusatzventils von der Freigabestellung in die Absperrstellung mit einem Stellantrieb erfolgen kann, der hinsichtlich seiner Schnelligkeit geringeren Anforderungen genügt, da das Zusatzventil im hohen Drehzahlbereich nicht arbeit und dauerhaft in der Freigabestellung gehalten ist. Der Ventiltrieb der Brennkraftmaschine kann daher vorzugsweise für den Bereich um den Nennleistungspunkt der Brennkraftmaschine mit hoher Drehzahl ausgelegt werden, so dass für die Nennleistung der Hubverlauf von Einlass - und Auslassventil optimiert ist und der Ladungswechsel im Brennraum hauptsächlich durch den Ventilhub und die Öffnungsdauer sowie - bezogen auf den Kurbelwellenwinkel - Öffnungsbeginn und das Ende des Schließvorgangs der Ventile bestimmt wird. Außerdem lässt sich für die Laststeuerung durch die Variabilität des Schließzeitpunktes des Zusatzventils das tatsächlich zur Verfügung stehende Öffnungszeitfenster für den Brennraum während der Ansaugphase aus der Überlagerung der Öffnungsdauer des Einlassventils und des Lufttaktventils nahezu beliebig einstellen.

Bei einer Weiterbildung des Verfahrens mit den in Anspruch 2 genannten Merkmalen kann bei geschlossenem Einlassventil und geöffnetem Zusatzventil die Restgassteuerung im Brennraum durch das Öffnen des Einlassventils erfolgen. Eine Füllung des Zylinders mit Frischgas wird jedoch durch das Schließen des Zusatzventils beendet, also wenn das Zusatzventil in die Absperrstellung während der Öffnungsdauer des Einlassventils verlagert wird. Ferner kann eine Frischgas-Ladungsmenge unter Überdruck zwischen dem Einlassventil und dem Zusatzventil eingespannt werden, wenn beide Ventile in ihrer Schließstellung vorliegen. Öffnet bei der nächsten Ansaugphase das Einlassventil, so wird dieses Frischgas-Ladungsmenge in Richtung Brennraum entspannt und führt zur Restgasausspülung des Brennraums.

Für die Laststeuerung selbst ist es vorteilhaft, wenn das Zusatzventil in der Absperrstellung verbleibt, zumindest bis das Einlassventil den Brennraum wieder verschließt, wie dies in Anspruch 3 angegeben ist.

Nach einer in Anspruch 4 angeführten Weiterbildung ist vorteilhaft, dass durch das Öffnen des Zusatzventils bereits während der Öffnungsphase des Auslassventils an die Einhaltung eines genauen Öffnungszeitpunktes für das Zusatzventil keine hohen Anforderungen gestellt werden, da das Einlassventil noch in Schließstellung liegt und somit von dem Zusatzventil dabei keinerlei Einfluss auf den Ladungswechsel ausgeht. Durch das frühe Öffnen des Zusatzventils werden auch die an den Stellantrieb des Zusatzventil gestellten dynamischen Anforderungen geringer.

Gemäß einer Weiterbildung des Verfahrens mit den in Anspruch 5 aufgeführten Merkmalen kann eine Steuerung des Restgases im Brennraum durch den Öffnungszeitpunkt des Zusatzventils erfolgen. Dabei öffnet das Einlassventil bereits, wenn das Zusatzventil noch geschlossen ist. Die Füllung des Brennraums mit Frischgas wird durch Schließen des Zusatzventils oder durch Schließen des Einlassventils eingestellt.

Besonders bevorzugt wird ein Ausführungsbeispiel entsprechend Anspruch 6, bei dem die Phasenlage der Öffnungsdauer des Einlassventils - bezogen auf den Kurbelwellenwinkel - veränderbar ist. Hierfür können die bereits im Stand der Technik bekannten Phasensteller bzw. Nockenwellenversteller verwendet werden. Damit kann bei dem erfindungsgemäßen Verfahren, insbesondere im unteren und mittleren Drehzahlbereich bzw. bei Leerlauf der Brennkraftmaschine, eine Vergrößerung der Überschneidungsfläche erreicht werden, wenn das Auslassventil noch geöffnet ist und das Einlassventil bereits geöffnet wird. Insbesondere bei niedrigen Drehzahlen der Brennkraftmaschine kann dadurch eine Erhöhung des Restgasgehaltes bei Teillast und ein Ausspülen des Restgases bei Volllast optimiert werden. Durch die variable Phasenlage der Öffnungs- und Schließzeiten des Einlassventils vergrößert sich somit der Kurbelwellenwinkelbereich, in dem ein Öffnen und Schließen des Zusatzventils für einen optimalen Ladungswechsel genutzt werden kann.

Bei einer Ausführungsform, die in Anspruch 7 angegeben ist, ist eine Abschaltung eines Zylinders oder einer Zylinderreihe mit mehreren Zylindern einer Brennkraftmaschine möglich, wenn das Zusatzventil für diesen Zylinder bzw. diese Zylinder in der Absperrstellung verbleibt bzw. gehalten wird. Die Zylinderabschaltung ermöglicht eine Reduzierung des Kraftstoffverbrauchs.

Als besonders vorteilhaft hat sich das erfindungsgemäße Verfahren bei einem zwangsgesteuerten Einlassventil gemäß Anspruch 8 herausgestellt, da Bauart bedingt zwangsgesteuerte Ventiltriebe nur mit hohem technischen Aufwand hinsichtlich des Ventilhubs variabel ausgestaltet werden können. Mit dem erfindungsgemäßen Verfahren ist es also möglich, bei einem zwangsgesteuerten Ventiltrieb durch die erfindungsgemäße Laststeuerung mit dem Zusatzventil eine Variabilität darzustellen. Besonders bevorzugt (Anspruch 9) wird für eine Zwangssteuerung des Einlassventils ein um ein Nocken geführtes Umschlingungselement verwendet, welches im Stand der Technik beispielsweise aus der DE 37 00 715 A1 bekannt ist. Als Umschlingungselement können Endlosschlaufen, Ketten, insbesondere Rollenketten, oder ähnliches verwendet werden.

Bei einem Ausführungsbeispiel, das die Merkmale des Anspruchs 10 zeigt, ist vorteilhaft, dass für eine Betätigung der Zusatzventile für jeweils zwei Zylinder ein einziger gemeinsamer Stellantrieb verwendet werden kann. Ist für diese beiden Zylinder ein Zündabstand von 360° Kurbelwellenwinkel vorgesehen, liegen aufgrund der Nockenkontur Winkelbereiche im Grundkreis des Nockens vor, während denen kein Einlassventil beider Zylinder geöffnet ist. In diesen Winkelbereichen kann die gemeinsame Betätigung das Lufttaktventil öffnen oder schließen, ohne Einfluss auf den Ladungswechsel dieser beiden Zylinder zu haben, so dass das Zusatzventil für die nächste Ansaugphase bzw. Öffnungsperiode des Einlassventils in die vorgesehene Stellung gebracht werden kann. Sofern die beiden Zylinder lediglich einen Zündabstand von 180° Kurbelwellenwinkel aufweisen, kann eine gemeinsame Betätigung der beiden Zusatzventile gegenläufig ausgeführt sein, so dass ein Zusatzventil des einen Zylinders geöffnet wird, während das Zusatzventil des anderen Zylinders gleichzeitig geschlossen wird. Selbstverständlich ist diese gemeinsame Betätigung von zwei Lufttaktventilen von zwei Zylindern auch für Brennkraftmaschinen geeignet, die mehrere Zylinderreihen mit jeweils zumindest zwei Zylindern aufweisen.

Die Erfindung wird nachfolgend anhand von Ausführungsbeispielen mit Bezug auf die Zeichnung näher erläutert.

Es zeigen:
- Fig. 1: schematisch eine Brennkraftmaschine mit einer Zylinderreihe mit vier Zylindern,
- Fig. 2: einen Schnitt durch die Brennkraftmaschine entlang der Linie II-II in Fig. 1,
- Fig. 3A bis 3D: jeweils einen Hubverlauf eines Auslass- und Einlassventils und der jeweils zugehörige Bewegungsverlauf zum Öffnen und Schließen eines Zusatzventils für verschiedene Drehzahl- und Lastbereiche der Brennkraftmaschine und
- Fig. 3E: ein Drehmoment der Brennkraftmaschine über der Drehzahl, wobei die Fig. 3A bis 3D in den zugeordneten Last- bzw. Drehzahlbereichen angeordnet sind.

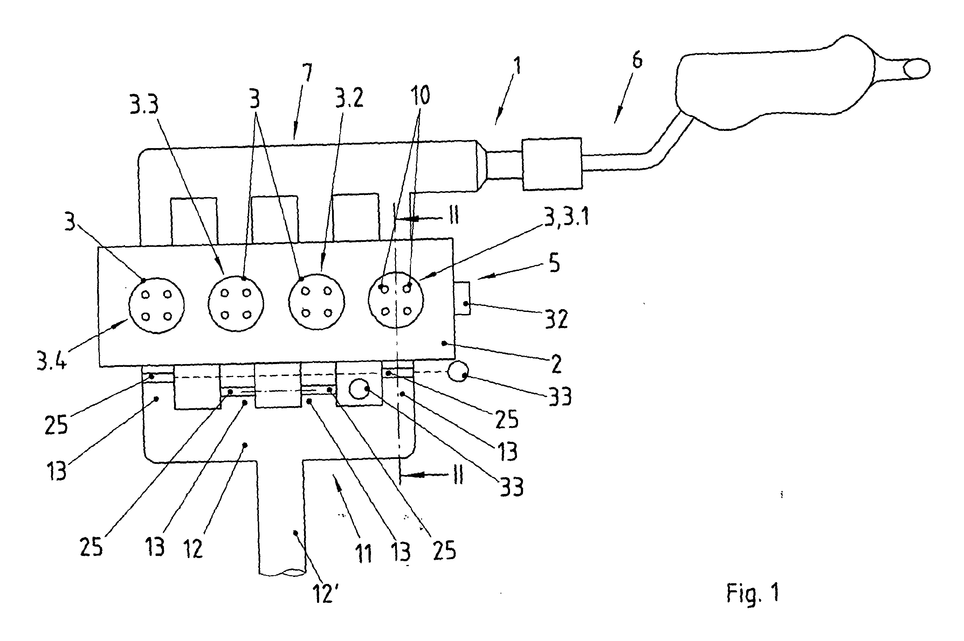

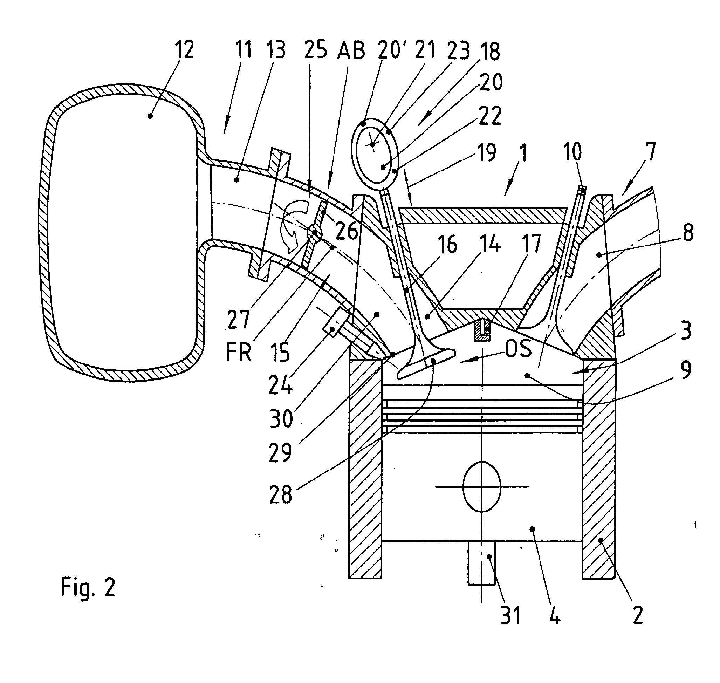

Anhand der Fig. 1 und 2 wird eine Brennkraftmaschine näher erläutert, die nachfolgend lediglich als Motor 1 bezeichnet ist. Fig. 1 zeigt schematisch und stark vereinfacht den Motor 1 mit einem Motorgehäuse 2, in dem zumindest ein Zylinder 3 mit einem darin eingesetzten Kolben 4 ausgebildet ist. Es können mehrere Zylinder 3, insbesondere vier Zylinder 3, in einer Zylinderreihe 5 angeordnet sein. Denkbar wäre es überdies, dass der Motor 1 mehrere Zylinderreihen 5, beispielsweise in so genannter V-Anordnung, aufweist. An dem Motorgehäuse 2 ist eine Abgasanlage 6 über einen Abgaskrümmer 7 befestigt, der jeweils einen in dem Motorgehäuse 2 angeordneten Auslasskanal 8 mit der Abgasanlage 6 verbindet. Innerhalb jedes Zylinders 3 ist ein Brennraum 9 vorgesehen, der mit dem zugeordneten Auslasskanal 8 verbunden ist, wenn ein Auslassventil 10 geöffnet ist. Ist das Auslassventil 10 in der in Fig. 2 gezeigten Schließstellung, ist der Brennraum 9 gegenüber dem Auslasskanal 8 verschlossen. Für jeden Zylinder 3 können auch mehrere, beispielsweise zwei Auslassventile 10 vorgesehen sein.

An dem Motorgehäuse 2 ist ferner eine Sauganlage 11 für die Frischluft - bzw. Frischgaszufuhr zum Brennraum 9 befestigt, die einen Luftsammler 12 aufweisen kann, der zu jedem Zylinder 3 führende Saugrohre 13 aufweist, die zusammen mit im Motorgehäuse 2 ausgebildeten Einlassabschnitten 14 einen Einlasskanal 15 bilden. Der Einlasskanal 15 wird gegenüber dem Brennraum 9 mit zumindest einem Einlassventil 16 verschlossen oder bei geöffnetem Einlassventil, wie in Fig. 2 gezeigt, mit dem Brennraum 9 verbunden, in welchen Brennraum 9 noch eine hier lediglich angedeutete Zündkerze 17 hineinragt. Der Antrieb für das Einlassventil 16, um dieses Öffnen und Schließen zu können, ist vorzugsweise als zwangsgesteuerter Ventiltrieb 18 ausgeführt, bei dem das Einlassventil 16 sowohl in der Schließ- als auch in der Öffnungsbewegungsrichtung (Doppelpfeil 19) zwangsweise über den Ventiltrieb 18 bewegt wird. Vorzugsweise umfasst der Ventiltrieb 18 für das Einlassventil 16 einen Nocken 20, der um seine Achse 21 drehantreibbar ist. Beispielsweise sind mehrere Nocken für mehrere Einlassventile 16 auf einer an sich bekannten Nockenwelle (nicht dargestellt) in bekannter Weise angeordnet. Für die Zwangssteuerung selbst ist um den Nocken 20 auf der Nockenumfangsfläche 22 ein ggf. endloses Umschlingungselement 23 gelegt, welches mit einem Ende des Ventilschafts 24 des Einlassventils 16 verbunden ist. Die Funktion eines derart zwangsgesteuerten Ventiltriebs 18 ist im Stand der Technik jedoch bekannt, so dass hierauf nicht näher eingegangen wird. Neben der Zuführung von Frischluft über die Sauganlage 11 in den Brennraum 9 ist für die Zuführung von Kraftstoff noch ein Einspritzventil 24 vorgesehen, welches vorzugsweise direkt in den Brennraum 9 den Kraftstoff einspritzt. Es kann jedoch auch eine so genannte Saugrohreinspritzung vorgesehen sein. Andere Varianten, um Kraftstoff in den Brennraum 9 zu befördern, sind ebenfalls möglich.

Innerhalb des Einlasskanals 15 ist stromaufwärts des Einlassventils 16 ein Zusatzventil 25 angeordnet, welches beispielsweise im Abschnitt des Saugrohrs 13 oder im Einlassabschnitt 14 liegen kann. Vorzugsweise wird das Zusatzventil 25 so nahe wie möglich an dem Einlassventil 16 angeordnet. Unabhängig von der Stellung des Einlassventils 16 kann das Zusatzventil 25 den Einlasskanal 15 freigeben oder - wie in Fig. 2 dargestellt - diesen insbesondere vollständig absperren. Hierfür weist das Zusatzventil 25 einen bewegbaren Ventilkörper 26 auf, der innerhalb des Einlasskanals 15 angeordnet ist. Der in seiner Lage veränderbare Ventilkörper 26 sperrt in der in Fig. 2 gezeigten Absperrstellung AB den Einlasskanal 15 ab. In einer lediglich gestrichelt angedeuteten Freigabestellung FR ist der Einlasskanal 15 freigegeben, also mit dem Luftsammler 12 verbunden. Im gezeigten Ausführungsbeispiel ist der Ventilkörper 26 als eine um eine mittige Drehachse 27 gelagerte Klappe ausgeführt und kann entsprechend um die Drehachse 27 die Absperrstellung AB oder die Freigabestellung FR einnehmen.

In Fig. 2 ist das Einlassventil 16 in Öffnungsstellung OS gezeigt, in der ein am anderen Ende des Ventilschafts 24 angeordneter Ventilteller 28 vom Ventilsitz 29 am Einlassabschnitt 14 abgehoben ist. In dieser Öffnungsstellung OS ist der Brennraum 9 mit dem Einlasskanal 15 verbunden. In einer nicht gezeigten Schließstellung des Einlassventils 16 liegt der Ventilteller 28 auf dem Ventilsitz 29 auf, wie dies in analoger Weise beim Auslassventil 10 gezeigt und an sich bekannt ist. Der Brennraum 9 ist dabei gegenüber dem Einlasskanal 15 verschlossen. Liegt sowohl das Zusatzventil 25 in der Absperrstellung AB und das Einlassventil 16 in der Schließstellung vor, wird dazwischen ein abgeschlossener Raum 30 gebildet, der umfangseitig von den Wänden des Einlasskanals 15 begrenzt wird.

Üblicherweise erfolgt der Antrieb des Ventiltriebs 18 beispielsweise über eine hier nicht dargestellte Kurbelwelle des Motors 1, an welcher Kurbelwelle die Kolben 4 über Pleuel 31 angelenkt sind. Über einen entsprechenden Steuertrieb, beispielsweise über einen Riemen, eine Kette oder Zahnräder, wird die Nockenwelle, auf der die Nocken 20 angeordnet sind, angetrieben. Um die Phasenlage der Öffnungs- und Schließzeiten, also die Öffnungsdauer, des Einlassventils verändern zu können, ist zwischen der Kurbelwelle und der Nockenwelle eine entsprechende Einrichtung 32 vorgesehen, die als so genannter Nockenwellenversteller bzw. Phasensteller in den verschiedensten Ausführungsformen bekannt ist, so dass auf deren Ausführung bzw. Funktion hier nicht weiter eingegangen wird.

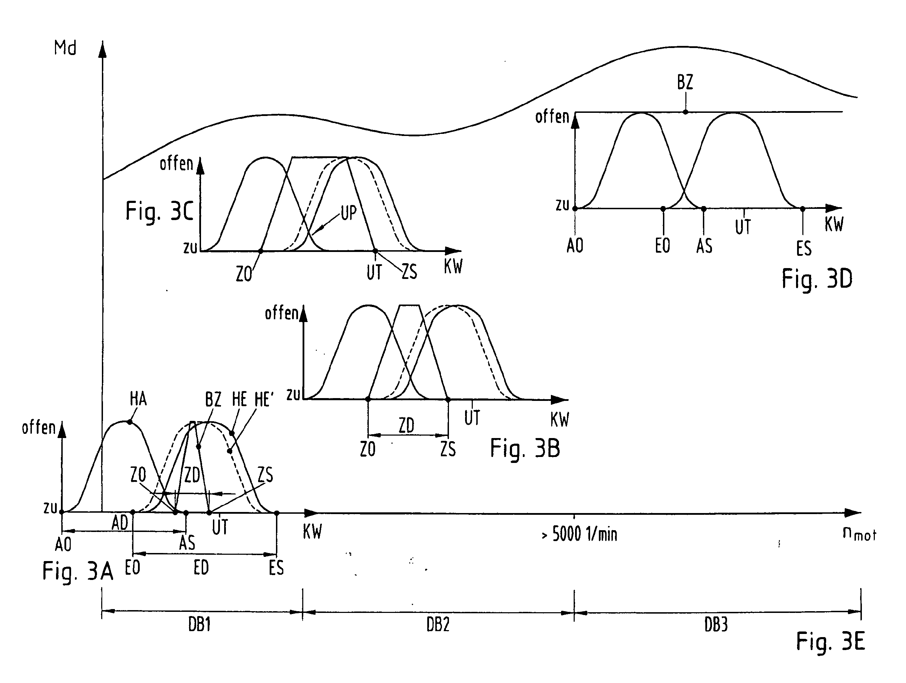

Anhand der Fig. 3A bis 3E wird nachfolgend der Betrieb bzw. ein Verfahren zur Laststeuerung der Kolben-Brennkraftmaschine, also des Motors 1, näher erläutert. In den Fig. 3A bis 3D ist jeweils in durchgezogenen Linien der Hubverlauf HA des Auslassventils 10 über dem Kurbelwellenwinkel KW angegeben. Bezogen auf den Kurbelwellenwinkel KW ist dem Auslassventil 10 somit ein Öffnungszeitpunkt AO (Auslass öffnet) und ein Schließzeitpunkt AS (Auslass schließt) zugeordnet; dazwischen liegt die Öffnungsdauer AD des Auslassventils 10, welche (AO, AS und AD) - wie ein Ventilhub - durch die Hubkontur der entsprechenden Nocken festgelegt sind. In den Fig. 3A bis 3D ist ferner jeweils der Hubverlauf HE des Einlassventils 16 über dem Kurbelwellenwinkel KW aufgetragen. Das Einlassventil 16 wird zum Öffnungszeitpunkt EO (Einlass öffnet) geöffnet, also vom Ventilsitz 29 abgehoben, und zum Schließzeitpunkt ES (Einlass schließt) wieder geschlossen, also auf den Ventilsitz 29 aufgelegt. Zwischen dem Öffnungszeitpunkt EO und dem Schließzeitpunkt ES liegt die Öffnungsdauer ED des Einlassventils 16. EO, ES und ED sowie der Ventilhub sind durch die Hubkontur des Nockens 20 bestimmt.

In den Fig. 3A bis 3D ist ferner jeweils der Bewegungsverlauf BZ des Ventilkörpers 26 des Zusatzventils 25 eingezeichnet, in welchem Bewegungsverlauf BZ der Ventilkörper 26 von der Absperrstellung AB (zu) in die Freigabestellung FR (offen) und wieder in die Absperrstellung AB verlagert wird. Demnach besitzt das Zusatzventil einen Öffnungszeitpunkt ZO (Zusatzventil öffnet) und einen Schließzeitpunkt ZS (Zusatzventil schließt) und dazwischen eine Öffnungsdauer ZD. Der Bewegungsverlauf BZ des Zusatzventils 25 ist ebenfalls über dem Kurbelwellenwinkel KW dargestellt. Zur Orientierung ist in den Fig. 3A bis 3D noch der so genannte untere Totpunkt UT des Kolbens 4 bezogen auf den Kurbelwellenwinkel KW eingetragen.

Schließlich ist in den Fig. 3A bis 3D gestrichelt jeweils der Hubverlauf HE' des Einlassventils 16 eingezeichnet, wie er sich aufgrund einer veränderten Phasenlage (mittels der Einrichtung 32) bezogen auf den Kurbelwellenwinkel ergeben kann. Es ist ersichtlich, dass sich die Öffnungsdauer ED des Einlassventils nicht ändert, sondern bezogen auf den Kurbelwellenwinkel KW nach "früh" oder nach "spät" (nicht dargestellt) verschoben werden kann.

Aus den Fig. 3B und 3C wird deutlich, dass das Zusatzventil 25 in Freigabestellung FR verlagert wird, während das Auslassventil 10 geöffnet ist, also während der Öffnungsdauer AD des Auslassventils 10. Der Schließzeitpunkt ZS liegt nach dem Öffnungszeitpunkt OE des Einlassventils 16. Bezogen auf den Kurbelwellenwinkel KW bzw. auf den Schließzeitpunkt ES des Einlassventils kann der Schließzeitpunkt SZ des Zusatzventils 25 innerhalb der Öffnungsdauer ED des Einlassventils 16 zur Laststeuerung variiert werden. Da das Zusatzventil 25 in der Freigabestellung FR liegt, erfolgt in der Überschneidungsphase UP von geöffnetem Ein- und Auslassventil die Ladungswechselsteuerung im Brennraum 9 hauptsächlich durch den Hubverlauf HA des Auslassventils und HE des Einlassventils. Diese Überschneidungsphase UP kann durch Veränderung der Phasenlage durch die Einrichtung 32 vergrößert oder verringert werden.

In Fig. 3A ist zu sehen, dass das Zusatzventil 25 erst nach dem Öffnungszeitpunkt EO des Einlassventils 16 geöffnet wird. Geschlossen wird das Zusatzventil innerhalb der Öffnungsdauer ED des Einlassventils 16, wobei das Öffnen (ZO) und Schließen (ZS) des Zusatzventils 25 innerhalb der Öffnungsdauer ED des Einlassventils 16 variabel sein kann.

In Fig. 3E ist das Drehmoment Md des Motors 1 in durchgezogener Linie über der Motordrehzahl nₘₒₜ dargestellt. Die Diagramme nach den Fig. 3A bis 3D sind innerhalb von Fig. 3E entsprechend dem Betriebs - bzw. Lastzustand des Motors 1 eingezeichnet. So liegt das Diagramm 3A im Bereich des Leerlaufs bzw. im unteren Drehzahlbereich DB1 und beispielsweise bei geringer Motorlast. Das Diagramm nach Fig. 3B liegt in einem mittleren Drehzahlbereich DB2 und bei Teillast des Motors 1. Ebenfalls im mittleren Drehzahlbereich DB2, jedoch bei Volllast, ist das Diagramm gemäß Fig. 3C eingezeichnet; das Diagramm gemäß Fig. 3D ist einem oberen Drehzahlbereich DB3 bei Volllast zugeordnet und zeigt den Hubverlauf HA und HA der Ventile 10 und 16 sowie den Bewegungsverlauf BZ des Zusatzventil 26 insbesondere bei Nennleistung des Motors 1. Entsprechend den Fig. 3A bis 3D erfolgt die Betätigung des Zusatzventils 26 nach dem Bewegungsverlauf BZ bzw. eine Ansteuerung der Einrichtung 32 jeweils bei dem zugeordneten Betriebszustand des Motors 1.

Somit wird deutlich, dass für die Laststeuerung des Motors 1 in dem mittleren Drehzahlbereich DB2 mit Teil- und/oder Volllast - wie vorstehend beschrieben - das Zusatzventil 25 in Freigabestellung FR verlagert wird, während das Auslassventil 10 geöffnet ist, was in den Fig. 3B und 3B gezeigt ist. Bei Volllast im oberen Drehzahlbereich ist hingegen das Zusatzventil 26 dauerhaft in der Freigabestellung FR gehalten und mithin nicht aktiv, was durch den entsprechenden Bewegungsverlauf BZ in Fig. 3d für das Zusatzventil 25 dargestellt ist. Für diesen Betriebszustand des Motors 1 erfolgt somit die Steuerung des Ladungswechsels im Brennraum 9 hauptsächlich über das Auslassventil 10 und das Einlassventil 16. Ferner kann die Einrichtung 32 zur Veränderung der Phasenlage bei Volllast und oberem Drehzahlbereich DB3 inaktiv sein. Der Ventiltrieb 18 mit der Kontur der Nocken 20 für die Einlassventile 16 bzw. die Kontur der nicht dargestellten Nocken für die Auslassventile ist somit auf den Nennleistungsbetrieb des Motors 1 ausgelegt.

Im mittleren und unteren Drehzahlbereich DB1 und DB2 ist das Zusatzventil 25 bzw. die Einrichtung 32 zur Änderung der Phasenlage in Funktion, wobei im unteren Drehzahlbereich - gemäß Fig. 3A - das Zusatzventil 25 erst nach dem Öffnungszeitpunkt EO des Einlassventils 16 geöffnet, also von der Absperrstellung AB in die Freigabestellung FR verlagert wird. Die Steuerung des Ladungswechsels erfolgt hier also hauptsächlich durch das Auslassventil 10 und das Zusatzventil 25 bei geöffnetem Einlassventil 16; der Schließzeitpunkt ZS des Zusatzventils 26 liegt ebenfalls innerhalb der Öffnungsdauer ED des Einlassventils 16. Die Öffnungsdauer ZD des Zusatzventils 25 ist bezogen auf den Kurbelwellenwinkel KW variabel und kann in Abhängigkeit der Lastanforderung an den Motor 1 eingestellt werden. Es kann daher vorgesehen sein, dass der Motor 1 drosselfrei arbeit, also ohne die sonst vorgesehene Drosselklappe im zentralen Ansaugrohr 12' der Sauganlage 11.

Aus Fig. 1 ist ersichtlich, dass jedem Saugrohr 13, also jedem Einlasskanal 15 ein entsprechendes Zusatzventil 25 zugeordnet ist. Jedes Zusatzventil 25 kann einen separaten Stellantrieb 33 besitzen, um den Ventilkörper 26 in die Absperrstellung AB und die Freigabestellung FR bewegen zu können. Im gezeigten Ausführungsbeispiel des Motors 1 kann jedoch lediglich ein Stellantrieb 33 für zwei Zusatzventile 25 vorgesehen sein, wobei bei Zündabständen von 360° Kurbelwellenwinkel KW der entsprechenden Zylinder 3 ein gemeinsamer Stellantrieb 33 für die Zylinder 3.1 und 3.4 und ein gemeinsamer Stellantrieb 33 für die Zylinder 3.2 und 3.3 angeordnet ist. Möglich wird dies dadurch, dass die Öffnungsdauer ED der Einlassventile 16 der entsprechenden Zylinder 3 deutlich geringer als 360° Kurbelwellenwinkel KW beträgt. Damit sind Winkelbereiche (Grundkreis 20' des Nockens 20) der zugeordneten Nocken 20 der Zylinder 3 vorhanden, in denen kein Einlassventil 16 der beiden entsprechenden Zylinder 3 geöffnet ist. In diesen Winkelbereichen kann der gemeinsame Stellantrieb 33 das Zusatzventil 25 entsprechend öffnen oder schließen, und während der Öffnungsdauer ED der Einlassventile 16 kann variabel das Schließen oder Öffnen des Zusatzventils 25 die Ladung im Zylinder 3 begrenzt werden.

In einem anderen Ausführungsbeispiel des Motors 1 kann der Zündabstand 180° Kurbelwellenwinkel KW entsprechend zweier Zylinder 3 mit gemeinsamem Stellantrieb 33 betragen. Ein gemeinsamer Stellantrieb wäre damit beispielsweise möglich für die benachbarten Zylinder 3.1 und 3.2 sowie 3.3 und 3.4 bzw. entsprechend der Zündfolge der Zylinder 3. Dabei wird bei den Zylindern 3 mit einem gemeinsamen Stellantrieb 33 für das jeweilige Zusatzventil 25 das entsprechende Zusatzventil 25 eines der Zylinder 3 geöffnet, während das Zusatzventil 25 des anderen der Zylinder 3 gleichzeitig geschlossen wird. Im Gegensatz zu dem vorstehend beschriebenen Ausführungsbeispiel ist hier also eine gegenläufige Betätigung der Zusatzventile 25 vorgesehen.

## Patentansprüche

1. Verfahren zur Laststeuerung einer Kolben - Brennkraftmaschine (1), bei dem
- ein Brennraum (9) durch ein zu öffnendes und zu verschließendes Auslassventil (10) mit einem Auslasskanal (8) verbunden oder verschlossen wird,
- der Brennraum (9) während einer Öffnungsdauer (ED) durch ein Einlassventil (16) mit einem Einlasskanal (15) durch Öffnen des Einlassventils (16) verbunden und anschließend durch Schließen des Einlassventils (16) wieder verschlossen wird,
- ein stromaufwärts des Einlassventils (16) angeordnetes Zusatzventil (25) den Einlasskanal (15) freigibt oder absperrt, und bei dem
- das Zusatzventil (25) zur Laststeuerung in einem unteren und/oder mittleren Drehzahlbereich (DB1, DB2) aus einer Freigabestellung (FR) in Absperrstellung (AB) verlagerbar ist, bevor das Einlassventil (16) schließt, wobei zumindest der Schließzeitpunkt (ZS) des Zusatzventils (25) innerhalb der Öffnungsdauer (ED) des Einlassventil (16) variabel ist,
und welches Verfahren **dadurch gekennzeichnet** ist,
- die Laststeuerung durch das Zusatzventil (25) in einem hohen Drehzahlbereich (DB3) der Brennkraftmaschine (1) dauerhaft in Freigabestellung (FR) verbleibt.

2. Verfahren nach Anspruch 1, **dadurch gekennzeichnet, dass** die Laststeuerung der Brennkraftmaschine (1) durch das Zusatzventil (25) in einem mittleren Drehzahlbereich (DB2) mit Teil - und/oder Volllast erfolgt.

3. Verfahren nach Anspruch 2, **dadurch gekennzeichnet, dass** das Zusatzventil (25)
- nachdem es von der Freigabestellung (FR) in die Absperrstellung (AB) verlagert wurde - in der Absperrstellung (AB) verbleibt, zumindest bis das Einlassventil (16) den Brennraum (9) wieder verschließt.

4. Verfahren nach einem der vorhergehenden Ansprüche 2, **dadurch gekennzeichnet, dass** das Zusatzventil (25) in Freigabestellung (FR) verlagert wird während das Auslassventil (10) geöffnet ist.

5. Verfahren nach Anspruch 1, **dadurch gekennzeichnet, dass** in einem unteren Drehzahlbereich das Zusatzventil (25) in Freigabestellung (FR) und in Absperrstellung (AB) verlagert wird, während das Einlassventil (16) geöffnet ist.

6. Verfahren nach einem der vorhergehenden Ansprüche, **dadurch gekennzeichnet, dass** eine Phasenlage der Öffnungsdauer (ED) des Einlassventils (16) - bezogen auf den Kurbelwellendrehwinkel (KW) - veränderbar ist.

7. Verfahren nach einem der vorhergehenden Ansprüche, **dadurch gekennzeichnet, dass** für eine Abschaltung zumindest eines Zylinders (3) der Brennkraftmaschine (1) das zugeordnete Zusatzventil (25) in Absperrstellung (AB) verbleibt.

8. Verfahren nach einem der vorhergehenden Ansprüche, **dadurch gekennzeichnet, dass** das Einlassventil (25) zwangsgesteuert wird.

9. Verfahren nach Anspruch 8, **dadurch gekennzeichnet, dass** die Zwangssteuerung des Einlassventils (25) durch ein um einen Nocken (20) geführtes Umschlingungselement (23) erfolgt.

10. Verfahren nach einem der vorhergehenden Ansprüche, **dadurch gekennzeichnet, dass** bei einer Brennkraftmaschine (1) mit zumindest einer Zylinderreihe (5) und zumindest vier Zylindern (3.1 bis 3.4) in jedem Einlasskanal (15) ein Zusatzventil (25) angeordnet ist, wobei für jeweils zwei Zylinder (3.1 bis 3.4) die Zusatzventile (25) gemeinsam betätigt werden.

## Claims

1. Method for the load control of a piston internal combustion engine (1), in which method
- a combustion chamber (9) is connected to an outlet duct (8) or closed off by means of an outlet valve (10) which is to be opened and closed,
- the combustion chamber (9) is connected by means of an inlet valve (16) to an inlet duct (15) by opening the inlet valve (16) during an opening period (ED) and is subsequently closed again by closing the inlet valve (16),
- an additional valve (25) which is arranged upstream of the inlet valve (16) opens or blocks the inlet duct (15), and in which method
- the additional valve (25) can, for load control in a lower and/or medium rotational speed range (DB1, DB2), be moved from an open position (FR) into a blocking position (AB) before the inlet valve (16) closes, with at least the closing time (ZS) of the additional valve (25) being variable within the opening period (ED) of the inlet valve (16), and which method is **characterized in that**
- the load control by means of the additional valve (25) remains permanently in the open position (FR) in a high rotational speed range (DB3) of the internal combustion engine (1).

2. Method according to Claim 1, **characterized in that** the load control of the internal combustion engine (1) by means of the additional valve (25) takes place in a medium rotational speed range (DB2) at part load and/or full load.

3. Method according to Claim 2, **characterized in that** the additional valve (25) - after it has been moved from the open position (FR) into the blocking position (AB) - remains in the blocking position (AB) at least until the inlet valve (16) closes the combustion chamber (9) again.

4. Method according to one of the preceding claims 2, **characterized in that** the additional valve (25) is moved into the open position (FR) while the outlet valve (10) is open.

5. Method according to Claim 1, **characterized in that**, in a low rotational speed range, the additional valve (25) is moved into the open position (FR) and into the blocking position (AB) while the inlet valve (16) is open.

6. Method according to one of the preceding claims, **characterized in that** a phase position of the opening period (ED) of the inlet valve (16) - in relation to the crankshaft rotational angle (KW) - is variable.

7. Method according to one of the preceding claims, **characterized in that**, for a shut-off of at least one cylinder (3) of the internal combustion engine (1), the assigned additional valve (25) remains in the blocking position (AB).

8. Method according to one of the preceding claims, **characterized in that** the inlet valve (25) is positively controlled.

9. Method according to Claim 8, **characterized in that** the positive control of the inlet valve (25) takes place by means of a wraparound element (23) which is guided around a cam (20).

10. Method according to one of the preceding claims, **characterized in that**, in an internal combustion engine (1) with at least one cylinder bank (5) and at least four cylinders (3.1 to 3.4), an additional valve (25) is arranged in each inlet duct (15), with the additional valves (25) for in each case two cylinders (3.1 to 3.4) being actuated together.

## Revendications

1. Procédé de commande de charge d'un moteur à combustion interne à piston alternatif (1), dans lequel
- une chambre de combustion (9) est connectée à un conduit d'échappement (8) ou est fermée par une soupape d'échappement (10) s'ouvrant et se fermant,
- la chambre de combustion (9), pendant une durée d'ouverture (ED), est connectée par une soupape d'admission (16) à un conduit d'admission (15) par l'ouverture de la soupape d'admission (16) et ensuite est à nouveau fermée par la fermeture de la soupape d'admission (16),
- une soupape supplémentaire (25) disposée en amont de la soupape d'admission (16) ouvre ou bloque le conduit d'admission (15), et dans lequel
- la soupape supplémentaire (25), pour la commande de charge dans une plage de régime inférieure et/ou moyenne (DB1, DB2), peut être déplacée d'une position d'ouverture (FR) dans une position de blocage (AB), avant que la soupape d'admission (16) se ferme, au moins l'instant de fermeture (ZS) de la soupape supplémentaire (25) étant variable à l'intérieur de la durée d'ouverture (ED) de la soupape d'admission (16),
ce procédé étant **caractérisé en ce que**
- la commande de charge par la soupape supplémentaire (25) reste de manière durable dans la position d'ouverture (FR) dans une plage de régime élevée (DB3) du moteur à combustion interne (1).

2. Procédé selon la revendication 1, **caractérisé en ce que** la commande de charge du moteur à combustion interne (1) par la soupape supplémentaire (25) s'effectue dans une plage de régime moyenne (DB2) à charge partielle et/ou à pleine charge.

3. Procédé selon la revendication 2, **caractérisé en ce que** la soupape supplémentaire (25), après avoir été déplacée de la position d'ouverture (FR) dans la position de blocage (AB), reste dans la position de blocage (AB), au moins jusqu'à ce que la soupape d'admission (16) ait à nouveau refermé la chambre de combustion (9).

4. Procédé selon l'une quelconque des revendications précédentes 2, **caractérisé en ce que** la soupape supplémentaire (25) est déplacée dans la position d'ouverture (FR) tandis que la soupape d'échappement (10) est ouverte.

5. Procédé selon la revendication 1, **caractérisé en ce que** dans une plage de régime inférieure, la soupape supplémentaire (25) est déplacée dans la position d'ouverture (FR) et dans la position de blocage (AB), tandis que la soupape d'admission (16) est ouverte.

6. Procédé selon l'une quelconque des revendications précédentes, **caractérisé en ce qu'**une position de phase de la durée d'ouverture (ED) de la soupape d'admission (16) - par rapport à l'angle de rotation du vilebrequin (KW) - peut être modifiée.

7. Procédé selon l'une quelconque des revendications précédentes, **caractérisé en ce que** pour une coupure d'au moins l'un des cylindres (3) du moteur à combustion interne (1), la soupape supplémentaire associée (25) reste dans la position de blocage (AB).

8. Procédé selon l'une quelconque des revendications précédentes, **caractérisé en ce que** la soupape d'admission (25) est commandée de manière forcée.

9. Procédé selon la revendication 8, **caractérisé en ce que** la commande forcée de la soupape d'admission (25) s'effectue par un élément d'enveloppement (23) guidé autour d'une came (20).

10. Procédé selon l'une quelconque des revendications précédentes, **caractérisé en ce que** dans le cas d'un moteur à combustion interne (1) avec au moins une rangée de cylindres (5) et au moins quatre cylindres (3.1 à 3.4), on dispose une soupape supplémentaire (25) dans chaque conduit d'admission (15), et pour respectivement deux cylindres (3.1 à 3.4), les soupapes supplémentaires (25) sont actionnées en même temps.
